# EUROPEAN PATENT APPLICATION

(11) **EP 4 119 816 A1**
(43) Date of publication of application: **18.01.2023**
(21) Application number: 20924393.0
(22) Date of filing: 10.03.2020
(51) Int. Cl.: F16H 57/033

(54) **MOTOR DRIVE UNIT AND MANUFACTURING METHOD THEREOF**

(71) Applicant: Musashi Seimitsu Industry Co., Ltd., Aichi 441-8560 (JP)
(72) Inventor: YAMAMOTO, Kenta, Toyohashi-shi, Aichi 441-8560 (JP); OKAMOTO, Teruhisa, Toyohashi-shi, Aichi 441-8560 (JP)
(74) Representative: Tiburzi, Andrea
(86) International application number: PCT/JP2020/010372
(87) International publication number: WO 2021/181539

(57) **Abstract**

In an electric drive unit, a reduction gear comprises an input shaft, a counter shaft, and an output shaft which are parallel to one another, and an input gear fixed to the input shaft, first intermediate gear and second intermediate gear supported by the counter shaft, and an output gear fixed to the output shaft constitute a gear set for decelerating the rotation of the input shaft and transmitting the rotation to the output shaft, wherein the electric drive unit further comprises one gear set selected from a plurality of gear sets (G1 to G3) having different overall reduction ratios, and a case (Cr) capable of accommodating and incorporating any gear set of the plurality of gear sets, wherein each of the plurality of gear sets has the same inter-shaft distances between the input shaft (Si), the counter shaft (Sc), and the output shaft (So), and at least one of the first intermediate gear (21) and second intermediate gear (22) has a gear diameter different from that of the other gear sets. Thus, a case can be commonly shared for a plurality of gear sets having different overall reduction ratios to save the cost.

## Description

### TECHNICAL FIELD

The present invention relates to an electric drive unit and manufacturing method of the electric drive unit in which an electric motor and a reduction gear are integrated, in particular, the reduction gear comprises an input shaft, a counter shaft, and an output shaft which are parallel to one another, and in which an input gear fixed to the input shaft and rotationally driven by the electric motor, a first intermediate gear supported by the counter shaft and engaged with the input gear, a second intermediate gear that rotates integrally coaxially with the first intermediate gear, and an output gear fixed to the output shaft and engaged with the second intermediate gear constitute a gear set for decelerating the rotation of the input shaft and transmitting the rotation to the output shaft.

### BACKGROUND ART

The electric drive unit described above is conventionally known as described in, for example, Patent Document 1.

### CITATION LIST

### Patent Literature

Patent Document 1: WO 2019/064478

### SUMMARY OF INVENTION

### TECHNICAL PROBLEM

Conventionally, the reduction ratio of an electric drive unit might be changed in accordance with, e.g., a difference in required specifications (e.g., maximum vehicle speed and tire diameter, among others) of the vehicle on which the electric drive unit is to be mounted. In this instance, the reduction ratio is changed by changing at least a part of the gear of the reduction gear; however, since the case for accommodating the gear is usually redesigned in accordance with the change of the gear, the case is also different when the changed reduction gear has a different reduction ratios. In other words, when the specifications of the reduction ratios are different, it is necessary to prepare a plurality of cases corresponding to the specifications, which increases the cost and complicates the component management.

In view of such circumstances, an object of the present invention is to provide an electric drive unit and manufacturing method of the electric drive unit, which can solve the above problems of a conventional structure.

### SOLUTION TO PROBLEM

In order to achieve the above object, the first feature of the present invention provides an electric drive unit in which an electric motor and a reduction gear are integrated, wherein the reduction gear comprises an input shaft, a counter shaft, and an output shaft which are parallel to one another, and wherein an input gear fixed to the input shaft and rotationally driven by the electric motor, a first intermediate gear supported by the counter shaft and engaged with the input gear, a second intermediate gear that rotates coaxially and integrally with the first intermediate gear, and an output gear fixed to the output shaft and engaged with the second intermediate gear constitute a gear set for decelerating the rotation of the input shaft and transmitting the rotation to the output shaft, the electric drive unit further comprising: one gear set selected from a plurality of gear sets having different overall reduction ratios; and a case capable of accommodating and incorporating any gear set of the plurality of gear sets, wherein each of the plurality of gear sets has the same inter-shaft distances between the input shaft, the counter shaft, and the output shaft, and at least one of the first intermediate gear and second intermediate gear has a gear diameter different from that of the other gear sets.

In addition to the first feature, the second feature of the present invention is that a second reduction ratio determined by the second intermediate gear and the output gear is set smaller than a first reduction ratio determined by the input gear and the first intermediate gear, and each of the plurality of gear sets has an overall reduction ratio different from the other gear sets by making the second reduction ratio different.

In addition to the second feature, the third feature of the present invention is that the input gear is formed integrally with the input shaft.

Further, in addition to any one of the first to third features, the fourth feature of the present invention is that each of the plurality of gear sets has an overall reduction ratio different from the other gear sets by making the gear diameter of the first intermediate gear same as the other gear sets and the second reduction ratio determined by the second intermediate gear and the output gear different from the other gear sets, and the lowest end positions of the output gear and the first intermediate gear have substantially the same height or the lowest end position of the output gear is lower than the lowest end position of the first intermediate gear when the gear set having the minimum overall reduction ratio of the plurality of gear sets is incorporated into the case.

In addition to any one of the second to fourth features, the fifth feature of the present invention is that in each of the plurality of gear sets, the first intermediate gear and second intermediate gear are configured as separate components and are supported by the counter shaft in a relatively non-rotatable manner, and only the second intermediate gear among first intermediate gear and second intermediate gear has a gear diameter different from that of the other gear sets.

In addition to any one of the first to fifth features, the sixth feature of the present invention is that the electric drive unit is used for rear wheel drive of a motorcycle, wherein the case is formed separately from a swing arm pivotally supported by a vehicle body of the motorcycle and is connected to the swing arm by retrofitting.

Further, in addition to any one of the first to sixth features, the seventh feature of the present invention is that the case comprises a reduction gear case serving as a housing of the reduction gear, and that the reduction gear case and a motor case serving as a housing of the electric motor are connected to each other so as to share a partition wall partitioning the reduction gear and the electric motor in the axial direction of the input shaft.

Further, the eighth feature of the present invention provides a manufacturing method of an electric drive unit in which an electric motor and a reduction gear are integrated, wherein the reduction gear comprises an input shaft, a counter shaft, and an output shaft which are parallel to one another, and wherein an input gear fixed to the input shaft and rotationally driven by the electric motor, a first intermediate gear supported by the counter shaft and engaged with the input gear, a second intermediate gear that rotates coaxially and integrally with the first intermediate gear, and an output gear fixed to the output shaft and engaged with the second intermediate gear constitute a gear set for decelerating the rotation of the input shaft and transmitting the rotation to the output shaft, the method comprising: a step of preparing a plurality of gear sets having different overall reduction ratios according to a plurality of required specifications related to the tire diameter or the maximum vehicle speed of the vehicle on which the electric drive unit is to be mounted; a step of preparing a case capable of accommodating and incorporating any gear set of the plurality of gear sets; and a step of selecting one gear set from the plurality of gear sets in accordance with the required specifications of the vehicle on which the electric drive unit is to be mounted and incorporating the gear set into the case.

### ADVANTAGEOUS EFFECTS OF INVENTION

According to the first feature of the present invention, the electric drive unit is provided with one gear set selected from a plurality of gear sets having different overall reduction ratios, and a case capable of accommodating and incorporating any gear set of the plurality of gear sets, wherein each of the plurality of gear sets has the same inter-shaft distances between an input shaft, a counter shaft and an output shaft, and at least one of the first intermediate gear and second intermediate gear has a gear diameter different from that of the other gear sets, so that a case can be commonly shared for a plurality of gear sets having different overall reduction ratios. Thus, even when the electric drive unit is changed to a different specification by changing the gear set to other gear set having a different overall reduction ratio, a commonly shared, i.e., single type case can be used, so that it is not necessary to redesign the case for each reduction ratio specification, thereby saving costs and simplifying component management.

According to the second feature, a second reduction ratio determined by the second intermediate gear and the output gear is set smaller than a first reduction ratio determined by the input gear and the first intermediate gear, and each of the plurality of gear sets has an overall reduction ratio different from the other gear sets by making the second reduction ratio different, so that the gear diameter of the output gear can be relatively reduced as compared with the second reduction ratio is set larger than the first reduction ratio, and the gear diameter of the output gear can be relatively reduced even when the gear set having the maximum overall reduction ratio (i.e., having the maximum diameter of the output gear) is incorporated into the case, thereby suppressing the enlargement of the case due to the extension of the output gear.

According to the third feature, the input gear is formed integrally with the input shaft, so that a boss for incorporating the input gear to the input shaft is not required, and the gear diameter of the input gear can be reduced accordingly. As a result, since the first reduction ratio can be made larger (and therefore the second reduction ratio smaller), it is possible to more effectively suppress the enlargement of the case due to the extension of the output gear.

According to the fourth feature, each of the plurality of gear sets has an overall reduction ratio different from the other gear sets by making the gear diameter of the first intermediate gear same as the other gear sets and the second reduction ratio determined by the second intermediate gear and the output gear different from the other gear sets, and the lowest end positions of the output gear and the first intermediate gear have substantially the same height or the lowest end position of the output gear is lower than the lowest end position of the first intermediate gear when the gear set having the minimum overall reduction ratio of the plurality of gear sets is incorporated into the case, so that the lowest end position of the first intermediate gear becomes the same height regardless of which one of the gear sets is incorporated, and the height becomes substantially the same as the lowest end position of the output gear or higher than the lowest end position of the output gear. From this relation, by setting the storage oil surface in the case to such a level that the lower part of the first intermediate gear is immersed, both the first intermediate gear and the output gear can be surely immersed in the storage oil in any of the gear sets, so that the oil splashed up by both gears can be utilized for lubrication in the case. In this instance, the lowest end position of the output gear is further lowered to increase the amount of oil immersion as the overall reduction ratio of the gear sets increases, but the amount of oil immersion of the first intermediate gear which does not change the lowest position remains at a minimum; this suppresses the transmission efficiency loss due to oil agitation of the first intermediate gear rotating at a speed higher than that of the output gear.

According to the fifth feature, in each of the plurality of gear sets, the first intermediate gear and second intermediate gear are configured as separate components and are supported by the counter shaft in a relatively non-rotatable manner, and only the second intermediate gear among the first intermediate gear and second intermediate gear has a gear diameter different from that of the other gear sets; therefore, in the plurality of gear sets, just changing the combination of the gear diameters of the second intermediate gear and the output gear can change their overall reduction ratio, so that the input gear and the first intermediate gear can be commonly used for all of the gear sets without changing the gear diameters. This contributes to further cost reduction in combination with the effect that a commonly shared case can be used for all gear sets as described above.

According to the sixth feature, the case is formed separately from a swing arm pivotally supported by a vehicle body of the motorcycle and is connected to the swing arm by retrofitting so that even if the swing arm is changed to meet a change of the required specifications of the motorcycle (e.g., change of the tire diameter, change of arrangement of the vehicle body and functional parts around the electric drive unit), this change does not hinder the sharing of the case, or the change can be easily adopted by simply replacing the swing arm to another one, and the effect of sharing the case for all the gear sets can be further enhanced as described above.

According to the seventh feature, the reduction gear case as the case and a motor case serving as a housing of the electric motor are connected to each other so as to share a partition wall partitioning the reduction gear and the electric motor in the axial direction of the input shaft, so that not only the reduction gear case but also the motor case are included in the case commonly shared for the plurality of gear sets, which contributes to further cost reduction. Furthermore, since the reduction gear case and the motor case share the partition wall that divides the reduction gear and the electric motor in the axial direction, the wall thickness of the axially adjacent portions of the reduction gear and the electric motor can be reduced, which is advantageous in miniaturizing the electric drive unit in the axial direction.

According to the eighth feature, one gear set is selected from the plurality of gear sets in accordance with the required specifications of the vehicle on which the electric drive unit is to be mounted, and the gear set is incorporated into the case capable of accommodating and incorporating any gear set of the plurality of gear sets, so that in addition to the effect according to the first feature, even when the vehicle has a plurality of different required specifications, a gear set having an optimum overall reduction ratio can be selected and used from the plurality of gear sets according to the required specification of the vehicle on which the electric drive unit is actually mounted. Thus, even when the required specification of the vehicle on which the electric drive unit is to be mounted is changed, the specification of the electric drive unit can be accordingly changed quickly and easily at a low cost while using the commonly shared case.

### BRIEF DESCRIPTION OF DRAWINGS

FIG. 1 is a side view of an essential part of a motorcycle on which an electric drive unit according to the present invention is mounted (first embodiment).
FIG. 2 is a plan view (corresponding to arrow 2 of FIG. 1) showing an embodiment of a main part of the motorcycle (first embodiment).
FIG. 3 is an enlarged sectional view taken along line 3-3 of FIG. 1 (first embodiment).
FIG. 4 is an enlarged sectional view taken along line 4-4 of FIG. 3 (first embodiment).
FIG. 5 is a sectional view corresponding to FIG. 4 illustrating a setting example of a gear set wherein the overall reduction ratio is changed in three types in accordance with a change in the specification (tire diameter) of a motorcycle, in which FIG. 5A shows an instance using a second gear set having a middle overall reduction ratio, and FIG. 5B shows an instance using a third gear set having a maximum overall reduction ratio (first embodiment).

### REFERENCE SIGNS LIST

- A: swing arm
- C: unit case as a case
- Cr: reduction gear case as a case
- Cm: motor case
- F: vehicle body
- G1 to G3: first to third gear sets as a plurality of gear sets
- LI, L2: inter-shaft distance
- M: electric motor
- R: reduction gear
- Si, Sc, So: input shaft, counter shaft, output shaft
- U: electric drive unit
- V: motorcycle as a vehicle
- 20, 23: input gear, output gear
- 21, 22: first intermediate gear, second intermediate gear
- 50: partition wall

### DESCRIPTION OF EMBODIMENTS

An example of the electric drive unit U according to the present invention will be described below with reference to the drawings. This embodiment illustrates an example in which the electric drive unit U is used as a rear-wheel drive power unit of the scooter type motorcycle V as a vehicle.

### FIRST EMBODIMENT

In the present specification, the front-rear and left-right directions are the directions with respect to the motorcycle V, and therefore, the front-rear and left-right directions of the electric drive unit U also coincide with the front-rear and left-right directions of the motorcycle V on which the electric drive unit is mounted.

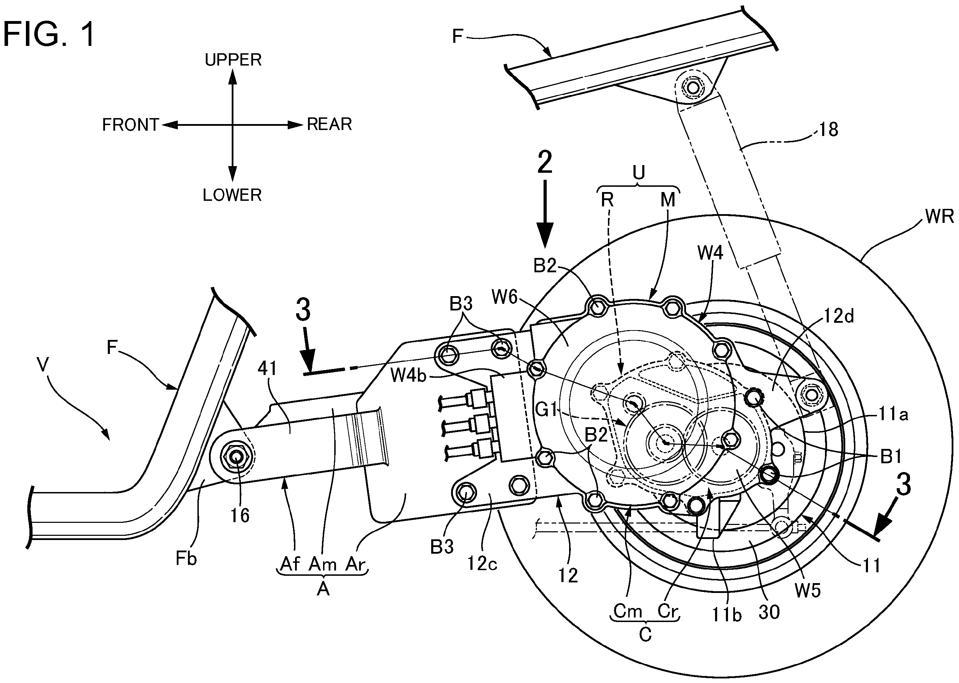

As shown FIG. 1, at a bracket Fb fixed to a front-rear middle portion of the vehicle body F of the motorcycle V, the front end of the swing arm A is vertically swingably supported by a pivot shaft 16, and the rear portion of the swing arm A is connected to a unit case C of the electric drive unit U. A rear axle 17 which rotates integrally with the rear wheels WR is rotatably supported on the rear portion of the unit case C, and a rear suspension 18 for elastically supporting the electric drive unit U (therefore, the rear wheels WR and the swing arm A) is interposed between the unit case C and the rear half portion of the vehicle body F.

Thus, the electric drive unit U and the rear wheels WR can vertically swing together with the swing arm A, and are pivotably supported by the vehicle body F via the swing arm A.

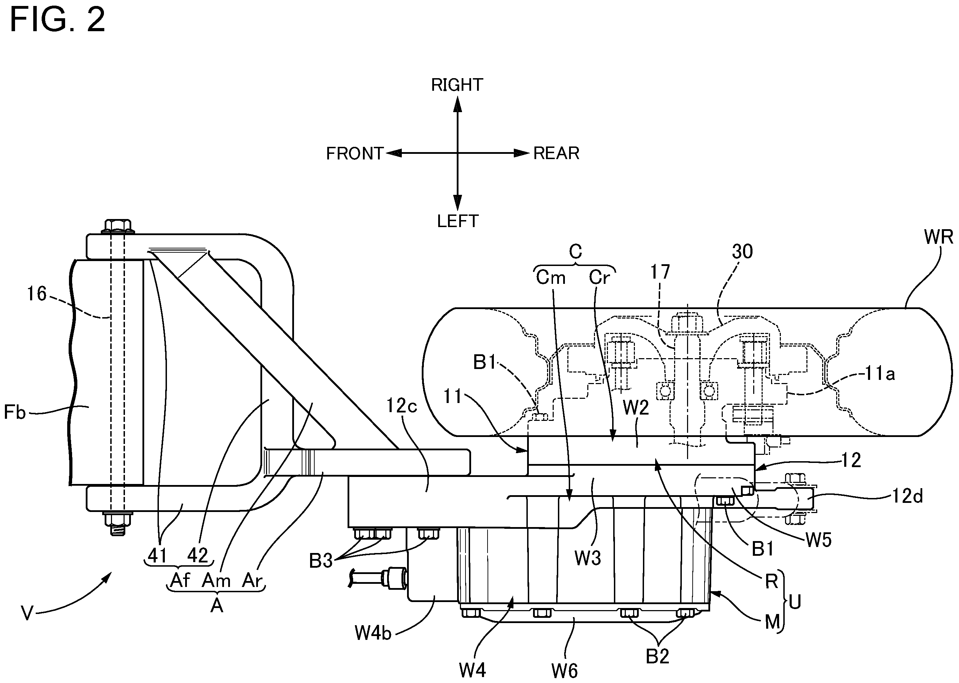

An example of the electric drive unit U will now be described with reference to FIGS. 2 to 4.

The electric drive unit U is composed by integrally unitizing an electric motor M and a reduction gear R for decelerating the output rotation of the electric motor M and transmitting it to the rear wheel WR, and the unit case C includes a reduction gear case Cr serving as a housing for the reduction gear R and a motor case Cm serving as a housing for the electric motor M. As will be described later, the reduction gear case Cr and the motor case Cm are integrally connected to each other so as to share a partition wall 50 partitioning the reduction gear R and the electric motor M in the left-right direction (i.e., in the axial direction of a shaft such as the input shaft Si described later).

In particular, the unit case C of the present embodiment is divided into a right side first case 11 and a left side second case 12 for closing the left opening end of the first case 11, and the first case 11 and second case 12 are removably connected by a plurality of bolts B1.

The first case 11 integrally includes a reduction gear right side wall forming portion W1 and a reduction gear outer peripheral wall forming portion W2 respectively forming a part of a right side wall and an outer peripheral wall of the reduction gear case Cr. The first case 11 further includes a disk-shaped drum lid 11a which is connected to the right side of the reduction gear right side wall forming portion W1 and covers the opening of a brake drum 30, and a bracket 11b which projects from the lower portion of the reduction gear outer peripheral wall forming portion W2 and supports the outer portion of the rear wheel brake wire. A shaft supporting portion and a driving portion, among other portions, of a rear wheel brake lining are attached to the drum lid 11a.

On the other hand, the second case 12 integrally includes a motor right side wall forming portion W3 and a motor outer peripheral wall forming portion W4 respectively forming a right side wall and an outer peripheral wall of the motor case Cm, as well as a reduction gear left side wall forming portion W5 integrally extending downwardly from the motor outer peripheral wall forming portion W4 and forming a part of the left side wall of the reduction gear case Cr, and a reduction gear outer peripheral wall forming portion W7 forming a part of the outer peripheral wall of the reduction gear case Cr. The left opening end of the second case 12 (i.e., the axial opening end of the motor outer peripheral wall forming portion W4) is closed by a motor cover W6 forming the left side wall portion of the motor case Cm, the motor cover W6 being detachably connected to the opening by a plurality of bolts B2.

The motor right side wall forming portion W3 of the second case 12 has a partition wall forming portion W3a which closes the left opening end of the first case 11 (i.e., the axial opening end of the reduction gear outer peripheral wall forming portion W2) and functions as the partition wall 50, and a first extension wall portion W3b which extends integrally around (especially at the front, the top, and the bottom of) the partition wall forming portion W3a and faces the motor cover W6.

Further, the second case 12 integrally includes a second extension wall portion 12c extending further to the front side than the first extension wall portion W3b, and a third extension wall portion 12d extending to the rear side of the reduction gear left side wall forming portion W5. The rear end portion of the swing arm A is connected to the second extension wall portion 12c, and the lower end portion of the rear suspension 18, the upper end portion of which is pivotally connected to the vehicle body F, is pivotally connected to the third extension wall portion 12d.

Thus, the right side wall of the reduction gear case Cr is formed by the reduction gear right side wall forming portion W1 of the first case 11. The reduction gear outer peripheral wall forming portion W2 of the first case 11 and the reduction gear outer peripheral wall forming portion W7 of the second case 12 constitute the outer peripheral wall of the reduction gear case Cr. The motor right side wall forming portion W3 (especially the partition wall forming portion W3a) of the second case 12 and the reduction gear left side wall forming portion W5 constitute the left wall of the reduction gear case Cr.

On the other hand, the motor case Cm has a right wall formed by the motor right side wall forming portion W3 (more specifically, the partition wall forming portion W3a and the first extension wall portion W3b) of the second case 12. The motor outer peripheral wall forming portion W4 of the second case 12 constitutes the outer peripheral wall of the motor case Cm. Further, the motor cover W6 constitutes the left side wall of the motor case Cm. Therefore, the motor right side wall forming portion W3 of the second case 12, especially the partition wall forming portion W3a, constitutes the partition wall 50 commonly shared by the reduction gear case Cr and the motor case Cm.

As shown in FIGS. 1 and 2, the swing arm A includes a front arm Af having a U-shape in plan view, a rear arm Ar extending rearward from the rear end of the front arm Af and having a plate-like shape with upper and lower wide surfaces, and a reinforcing connecting arm Am integrally connecting the front arm Af and rear arm Ar, and the entire swing arm A is integrally formed (e.g., by casting). It should be noted that the swing arm A may be divided into a plurality of elements as needed, and these elements may be integrally connected (e.g., by welding).

The front arm Af has a pair of left and right side wall portions 41 extending in the front-rear direction, respectively, and a rear wall portion 42 integrally connecting the rear ends of the both side wall portions 41, and the rear arm Ar is integrally connected to the rear wall portion 42 by being offset to one of the left and right sides (left side in the illustrated example). The connecting arm Am extends so as to obliquely intersect the rear wall portion 42 in plan view, and integrally connects the right side wall portion 41 and the right side surface of the rear arm Ar.

The left side surface of the rear arm Ar is superposed on the second extension wall portion 12c of the second case 12, and is detachably connected therewith by a plurality of bolts B3. Therefore, the swing arm A can be easily replaced with another swing arm A having different specifications (e.g., front-rear length, shape, and structure).

The internal space of the motor case Cm accommodates fixed elements (e.g., a stator 31 and an electronic substrate) of the electric motor M and movable elements (e.g., a rotor 32 and a rotor shaft 33 rotating integrally with the rotor 32) cooperating with the fixed element. The stator 31, which is a fixed element, is fixed to the inner surface of the motor case Cm, and the rotor shaft 33, which is a movable element, is rotatably supported by the left side wall and the right side wall of the motor case Cm through bearings, respectively.

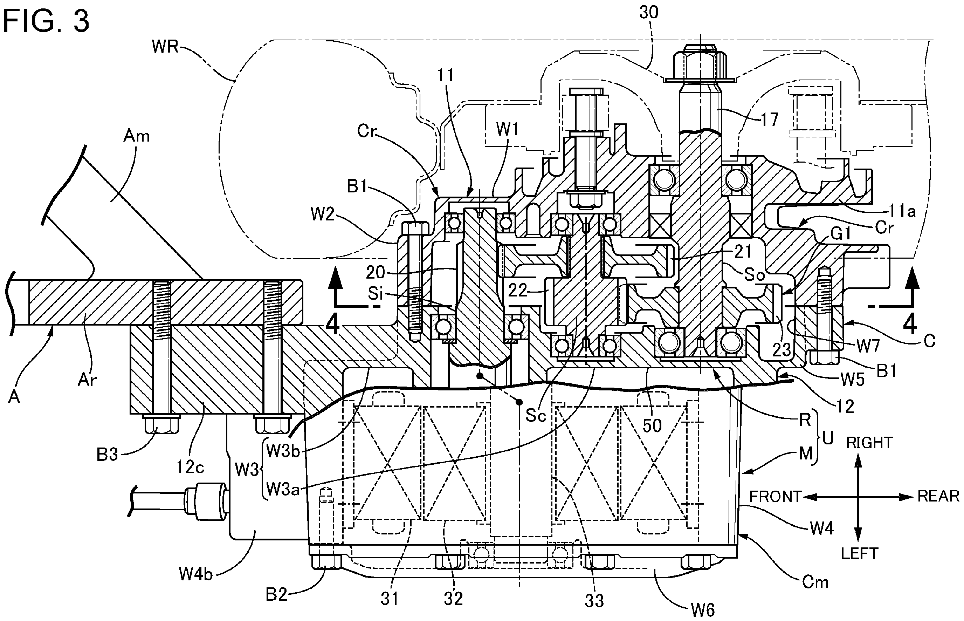

The rotor shaft 33 is integrally formed on the same axis as the input shaft Si of the reduction gear R to be described below. It should be noted that the reason why the rotor shaft 33 and the input shaft Si do not appear to be on the same axis as each other in FIG. 3 is that the reduction gear case Cr is drawn longer than the actual length thereof in relation to that the illustrated cross section of the gear set G1 in FIG. 3 is not a horizontal cross-section (but is a curved cross section passing through the input shaft Si, the counter shaft Sc, and the output shaft So of the reduction gear R).

A raised portion W4b formed integrally with the outer peripheral wall portion of the motor case Cm (i.e., the motor outer peripheral wall forming portion W4 of the second case 12) is provided with a coupler portion for coupling a wire which is connected to an electronic control device (not shown) and can energize the electric motor M.

Next, the internal structure of the reduction gear R will be described mainly with reference to FIG. 3.

The reduction gear R has an input shaft Si, a counter shaft Sc, and an output shaft So which extend in the left-right direction in the reduction gear case Cr and are parallel to one another. Each of the input shaft Si, the counter shaft Sc, and the output shaft So is rotatably supported on the right side wall and the left side wall of the reduction gear case Cr via bearings. In the present embodiment, the counter shaft Sc and the output shaft So are arranged in front and rear positions lower on the rear side than the input shaft Si located in the front most position. The reduction gear case Cr accommodates an input gear 20 to be fixed to (in this embodiment, formed integrally with) an input shaft Si, a first intermediate gear 21 fitted (in this embodiment, spline-fitted) and fixed to a counter shaft Sc and meshed with the input gear 20 and having a gear diameter (and therefore the number of teeth) larger than that of the input gear 20, a second intermediate gear 22 fixed to (in this embodiment, formed integrally with) the counter shaft Sc so as to rotate coaxially and integrally with the first intermediate gear 21, and an output gear 23 fixed (e.g., press-fitted) to the output shaft So and meshed with the second intermediate gear 22 and having a gear diameter (and therefore the number of teeth) larger than that of the second intermediate gear 22.

Thus, the input gear 20, the first intermediate gear 21 and second intermediate gear 22, and the output gear 23 constitute gear sets G1 to G3 for decelerating the rotation of the input shaft Si in two steps and transmitting it to the output shaft So. In particular, in this embodiment, before assembling the electric drive unit U, a plurality of gear sets G1 to G3 having different overall reduction ratios are prepared in advance.

Here, the plurality of gear sets G1 to G3 are prepared in order to select the optimum overall reduction ratio of the gear sets G1 to G3 to be incorporated into the reduction gear R from the plurality of gear sets G1 to G3 according to the plurality of required specifications related to the tire diameter or the maximum vehicle speed of the motorcycle V on which the electric drive unit U is to be mounted. The plurality of required specifications related to the tire diameter or the maximum vehicle speed are not limited to the tire diameter or the maximum vehicle speed, but include various required specifications (e.g., acceleration performance and torque characteristics) capable of changing the vehicle traveling performance by changing the reduction ratio.

In this embodiment, the electric drive unit U is provided with one gear set selected from the plurality of gear sets G1 to G3 and a reduction gear case Cr capable of accommodating and incorporating any gear set of the plurality of gear sets G1 to G3. The reduction gear case Cr constitutes the case of the present invention commonly shared by the plurality of gear sets G1 to G3.

The unit case C is formed by coupling the reduction gear case Cr and the motor case Cm, but in the present embodiment, a commonly shared motor case Cm is used regardless of which one of the plurality of gear sets G1 to G3 is incorporated into the reduction gear case Cr. Therefore, in such a case structure, the unit case C also constitutes the case of the present invention.

In each of the plurality of gear sets G1 to G3 described above, the inter-shaft distance L1 between the input shaft Si and the counter shaft Sc, and the inter-shaft distance L2 between the counter shaft Sc and the output shaft So are set to be the same as those of the other gear sets G1 to G3. In the reduction gear case Cr serving as a commonly shared case for the plurality of gear sets G1 to G3, the distances between the centers of the shaft supporting portions (bearing holes provided with respective bearings) for receiving the input shaft Si, the counter shaft Sc, and the output shaft So are set to be the same as the inter-shaft distances L1 and L2.

In each of the plurality of gear sets G1 to G3, at least one of the first intermediate gear 21 and second intermediate gear 22 (i.e., either or both of the first intermediate gear 21 and second intermediate gear 22) has a gear diameter different from that of the other gear sets G1 to G3. Thus, each of the gear sets G1 to G3 has an overall reduction ratio different from that of the other gear sets G1 to G3 by making at least one of the intermediate gears (second intermediate gear 22 in this embodiment) diameter different from that of the other gear sets G1 to G3.

The overall reduction ratios of each of the gear sets G1 to G3 corresponds to the multiplication of the first reduction ratio determined by the input gear 20 and the first intermediate gear 21 and the second reduction ratio determined by the second intermediate gear 22 and the output gear 23, and in particular, in this embodiment, the second reduction ratio is set smaller than the first reduction ratio.

Furthermore, in the present embodiment, the overall reduction ratio of each of the plurality of gear sets G1 to G3 is different from that of the other gear sets G1 to G3 by making only the second reduction ratio different by changing the gear diameter of the second intermediate gear 22 (thus the output gear 23). In addition, the support heights of the counter shaft Sc and the output shaft So are set so that the lowest end positions of the output gear 23 and the first intermediate gear 21 have substantially the same height or the lowest end position of the output gear 23 is lower than the lowest end position of the first intermediate gear 21 when the gear set having the minimum overall reduction ratio of the plurality of gear sets G1 to G3 is incorporated into the reduction gear case Cr. The substantially the same height refers to a degree that allows a difference in height corresponding to the tooth depth of the first intermediate gear 21. In other words, the difference in height corresponding to the tooth depth is regarded as included in an substantially the same height.

In this instance, the oil surface O of the lubricating oil stored in the bottom portion of the reduction gear case Cr is set at a level that the lower portion of the first intermediate gear 21 is immersed in the lubricating oil.

Next, the operation of this embodiment will be described. In the electric drive unit U of the motorcycle V, when the input shaft Si of the reduction gear R is rotationally driven by the driving force of the electric motor M, the first step deceleration is performed between the input gear 20 and the first intermediate gear 21, and the second step deceleration is performed between the second intermediate gear 22 and the output gear 23, and the rotation is transmitted from the output shaft So to the rear wheel WR, whereby the rear wheel WR is rotationally driven and the motorcycle V travels. When the road surface traveled by the motorcycle V has irregularities, the rear wheel WR, and therefore the swing arm A, vertically swings together with the electric drive unit U, and follows the irregularities without difficulty.

At least the following steps are performed in the manufacture and assembly of the electric drive unit U.

### MANUFACTURING STEP OF PLURALITY OF GEAR SETS

In the motorcycle V on which the electric drive unit U is to be mounted, there may be a plurality of required specifications with respect to the tire diameter of the rear wheel WR and the maximum vehicle speed, among other factors. In this instance, it is desirable to selectively use the plurality of gear sets G1 to G3 having different overall reduction ratios in accordance with the required specifications in order to improve the vehicle traveling performance.

In view of the above, in the present embodiment, the constituent gears 20 to 23 of the gear sets G1 to G3, as well as the input shaft Si, the counter shaft Sc, and the output shaft So are prepared in advance so that any of gear sets G1 to G3 can be selectively used.

### MANUFACTURING STEP OF UNIT CASE

Components of a single type reduction gear case Cr (and thus a unit case C) capable of accommodating and incorporating any gear set of the plurality of gear sets G1 to G3, such as first case 11 and second case 12, are manufactured and prepared in advance so as to be used as a commonly shared case regardless of which one of the gear sets G1 to G3 is selected.

### INCORPORATING STEP OF SELECTED GEAR SET TO UNIT CASE

One optimum gear set is selected from the plurality of gear sets G1 to G3 according to required specifications related to the tire diameter and the maximum vehicle speed, among other factors of a motorcycle V on which the electric drive unit U is to be mounted. Then, the selected gear set (e.g., the first gear set G1) is incorporated into the reduction gear case Cr (i.e., the combined body of the first case 11 and second case 12) to assemble the reduction gear R, and motor components are incorporated into the motor case Cm (i.e., the combined body of the second case 12 and the motor cover W6) to assemble the electric motor M, whereby the assembly step of the electric drive unit U is completed.

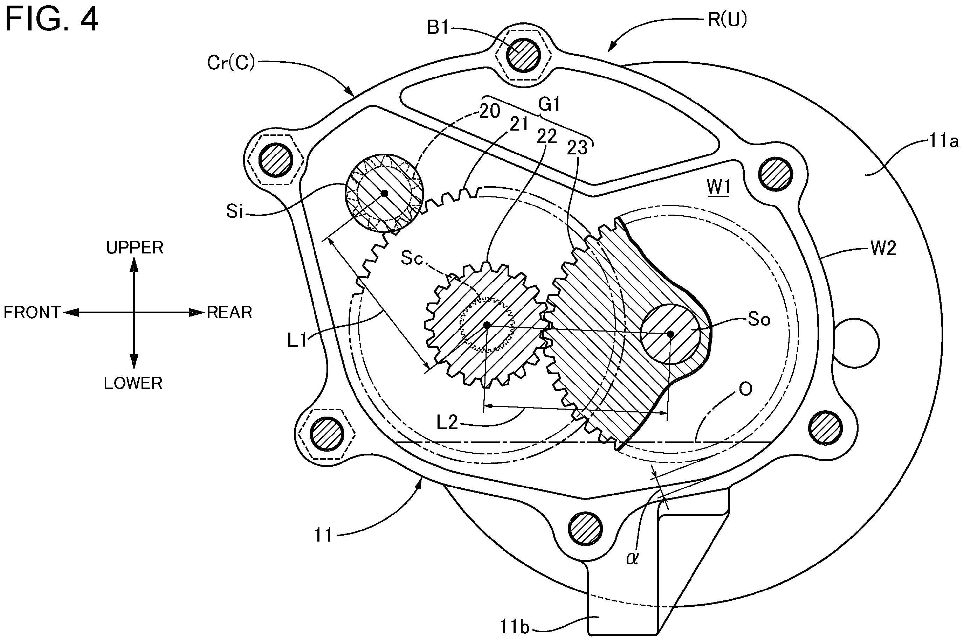

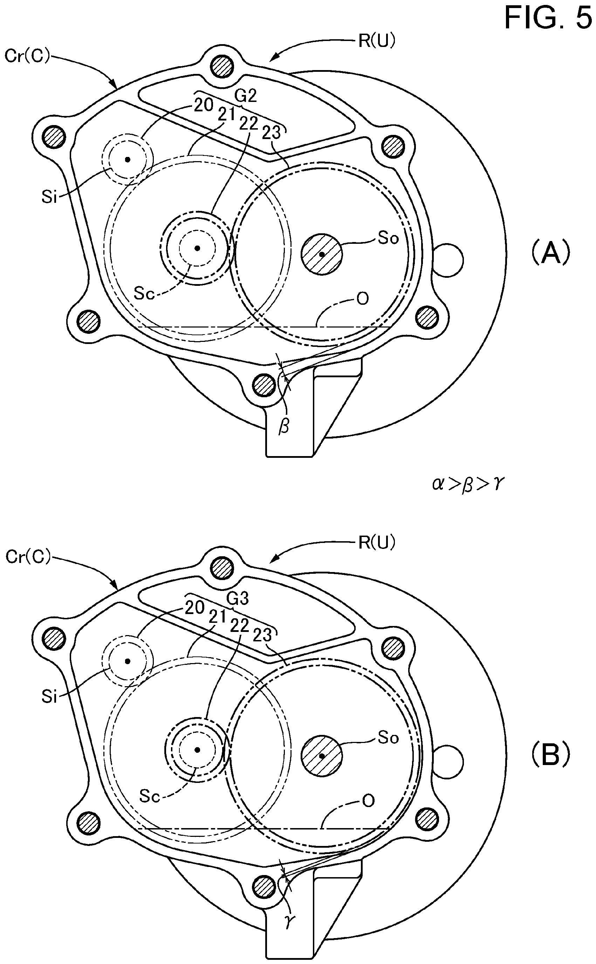

Here, a specific example will be described. For example, assume that three gear sets G1 to G3 respectively having different overall reduction ratios are prepared. In this instance, the embodiment shown in FIGS. 3 and 4 is a first setting example in which the first gear set G1 having a minimum overall reduction ratio is incorporated into an electric drive unit U for a motorcycle having a tire diameter specification of 10 inches, the embodiment shown in FIG. 5A is a second setting example in which the second gear set G2 having a middle overall reduction ratio is incorporated into an electric drive unit U for a motorcycle having a tire diameter specification of 12 inches, and the embodiment shown in FIG. 5B is a third setting example in which the third gear set G3 having a maximum overall reduction ratio is incorporated into an electric drive unit U for a motorcycle having a tire diameter specification of 14 inches. Thus, as the tire diameter becomes larger in the specification, a gear set having a larger overall reduction ratio is selected, so that sufficient driving torque can be applied to the rear wheel WR having a larger diameter.

In any of the above-described setting examples, the lower end position of the first intermediate gear 21 has the same height and the first intermediate gear 21 has the same gear diameter. On the contrary, the output gear 23 has the smallest diameter in the first setting example (FIG. 4) and the largest diameter in the third setting example (FIG. 5B). Therefore, as shown in FIGS. 4 and 5, as the overall reduction ratio of the gear sets G1 to G3 increases, the gap between the output gear 23 and the lower half of the inner peripheral wall of the reduction gear case Cr narrows (α > β > γ), and the position of the lower end of the output gear 23 becomes the lowest.

Although the above setting examples correspond to a plurality of specifications having different tire diameters for the motorcycle V, when a plurality of specifications having, e.g., the same tire diameters and different maximum vehicle speeds are defined for the motorcycle V, an optimum gear set may be selected from the plurality of gear sets G1 to G3 having different overall reduction ratios according to the maximum vehicle speed, and the optimum gear set may be incorporated into the reduction gear case Cr. In this instance, a gear set having a smaller overall reduction ratio is selected for a higher maximum vehicle speed.

According to the above-described steps, the most desirable one gear set among the plurality of gear sets G1 to G3 having different overall reduction ratios is selected and incorporated into the reduction gear case Cr according to the plurality of required specifications of the motorcycle V on which the electric drive unit U is to be mounted. Thus, even when the motorcycle V has a plurality of different required specifications (e.g., tire diameter and maximum vehicle speed, among others), a gear set having an optimum overall reduction ratio can be selected and used from the plurality of gear sets G1 to G3 according to the required specification of the motorcycle V on which the electric drive unit U is to be mounted. Therefore, when the required specification of the motorcycle V is changed, the specification of the electric drive unit U can be accordingly changed quickly and easily at a low cost while using the commonly shared reduction gear case Cr.

As described above, the electric drive unit U of the present embodiment is provided with one gear set selected from the plurality of gear sets G1 to G3 having different overall reduction ratios, and a reduction gear case Cr capable of accommodating and incorporating any gear set of the gear sets G1 to G3, and each of the plurality of gear sets G1 to G3 has the same inter-shaft distances LI, L2 between the input shaft Si, the counter shaft Sc, and the output shaft So, and at least one of the first intermediate gear 21 and second intermediate gear 22 (the second intermediate gear 22 in the embodiment) has a gear diameter different from that of the other gear sets G1 to G3.

Thus, even when the electric drive unit U is changed to a different specification by changing the gear set to other gear set having a different overall reduction ratio, a commonly shared (i.e., single type) reduction gear case Cr can be used, so that it is not necessary to redesign the reduction gear case Cr for each reduction ratio specification, thereby saving costs and simplifying component management.

Further, in the electric drive unit U of the present embodiment, a second reduction ratio determined by the second intermediate gear 22 and the output gear 23 is set smaller than a first reduction ratio determined by the input gear 20 and the first intermediate gear 21, and each of the plurality of gear sets G1 to G3 has an overall reduction ratio different from the other gear sets G1 to G3, especially by making the second reduction ratio different. As a result, the gear diameter of the output gear can be relatively reduced as compared with the second reduction ratio is set larger than the first reduction ratio, so that the gear diameter of the output gear 23 can be relatively reduced even when the gear set having the maximum overall reduction ratio (i.e., having the maximum diameter of the output gear 23), i.e., the third gear set G3 is incorporated into the reduction gear case Cr, thereby suppressing the enlargement of the reduction gear case Cr due to the extension of the output gear 23 as much as possible.

When the overall reduction ratios of the gear sets G1 to G3 are made different, the amount of change in the gear diameter of the output gear 23 is smaller when the second reduction ratio is set smaller than the first reduction ratio. This is because, the overall reduction ratio is determined by the multiplication of the first reduction ratio and the second reduction ratio, and the second reduction ratio to be changed in accordance with the overall reduction ratio is small, so that the gear diameters to be changed between the second intermediate gear 22 and the output gear 23 relating to the second reduction ratio can be also small. When the amount of change in the gear diameter of the output gear 23 is small, with respect to the maximum value α of the gap between the output gear 23 and the inner peripheral wall of the reduction gear case Cr when the overall reduction ratio is maximum and the minimum value γ of the gap when the overall reduction ratio is minimum, the difference between them (α - γ) is small, so that the amount of the oil splashed up by the output gear 23 is stabilized for the reasons described below. In other words, since the amount of the oil splashed up by the output gear 23 is affected by the size of the gap, by making the difference (α - γ) in the size of the gap to be small, the change in the amount of the oil splashed up can be small, which stabilize the amount of the oil splashed up.

In particular, the input gear 20 of this embodiment is formed integrally with the input shaft Si, i.e., without a seam. Thus, a boss for incorporating the input gear 20 to the input shaft Si need not be specially provided on the outer periphery of the input shaft Si, so that the gear diameter of the input gear 20 can be reduced accordingly. As a result, since the first reduction ratio can be made larger (and therefore the second reduction ratio smaller), it is possible to more effectively suppress the enlargement of the reduction gear case Cr due to the extension of the output gear 23.

In each of the plurality of gear sets G1 to G3 of the present embodiment, the gear diameter of the first intermediate gear 21 is same, and the second reduction ratio is different, thereby making the overall reduction ratio different, and the lowest end positions of the output gear 23 and the first intermediate gear 21 are set to have substantially the same height or the lowest end position of the output gear 23 is set lower than the lowest end position of the first intermediate gear 21 when the first gear set G1 having the minimum overall reduction ratio is incorporated into the reduction gear case Cr. As a result, the lowest end position of the first intermediate gear 21 becomes the same height regardless of which one of the gear sets G1 to G3 is incorporated, and the height becomes substantially the same as the lowest end position of the output gear 23 or higher than the lowest end position of the output gear 23.

From this height relation, by setting the stored-oil surface O in the reduction gear case Cr to such a level that the lower part of the first intermediate gear 21 is slightly immersed as shown in FIG. 4, both the first intermediate gear 21 and the output gear 23 can be surely immersed in the stored oil in any of the gear sets G1 to G3 as shown in FIGS. 4 and 5, so that the oil splashed up by both the gears 21 and 23 can be effectively and sufficiently utilized for lubrication in the reduction gear case Cr. In this instance, as shown in FIG. 5, the lowest end position of the output gear 23 is further lowered to increase the amount of oil immersion as the overall reduction ratio of the gear sets G1 to G3 increases, but the amount of oil immersion of the first intermediate gear 21 which does not change the lowest position remains at a minimum; this suppresses the transmission efficiency loss due to oil agitation of the first intermediate gear 21 rotating at a speed higher than that of the output gear 23.

Further, the reduction gear case Cr (therefore, unit case C) of the present embodiment is formed separately from the swing arm A pivotally supported by the vehicle body F of the motorcycle V and is connected to the swing arm A by retrofitting. As a result, even if the swing arm A is changed to meet a change of the required specifications of the motorcycle V (e.g., change of tire diameter, change of arrangement of vehicle body F and functional parts around electric drive unit U), this change does not hinder the sharing of the reduction gear case Cr, or the change can be easily adopted by simply replacing the swing arm A to another one having a different shape and structure according to the changed specifications, and the effect of sharing the reduction gear case Cr for all the gear sets G1 to G3 can be further enhanced as described above.

Further, in the present embodiment, the reduction gear case Cr serving as the housing of the reduction gear R and the motor case Cm serving as the housing of the electric motor M are connected to each other so as to share the partition wall 50 (partition wall forming portion W3a of the second case 12 in the embodiment) which partitions the reduction gear R and the electric motor M in the axial direction. As a result, not only the reduction gear case Cr but also the motor case Cm are included in the case commonly shared for the plurality of gear sets G1 to G3, which contributes to further cost reduction. Furthermore, since the reduction gear case Cr and the motor case Cm share the partition wall 50 that divides the reduction gear R and the electric motor M in the axial direction, the wall thickness of the axially adjacent portions of the reduction gear R and the electric motor M can be reduced, which is advantageous in miniaturizing the electric drive unit U in the axial direction.

Furthermore, in each of the plurality of gear sets G1 to G3 of the present embodiment, the first intermediate gear 21 and second intermediate gear 22 are configured as separate components, and among the first intermediate gear 21 and second intermediate gear 22, the second intermediate gear 22 (thus the output gear 23) in particular has a gear diameter different from that of the other gear sets G1 to G3. Thus, in the plurality of gear sets G1 to G3, just changing the combination of the gear diameters of the second intermediate gear 22 and the output gear 23 can change their overall reduction ratio, so that the input gear 20 and the first intermediate gear 21 can be commonly used for all of the gear sets G1 to G3 without changing their gear diameters. This contributes to further cost reduction in combination with the effect that a commonly shared reduction gear case Cr can be used for all gear sets G1 to G3 as described above.

Although the embodiments of the present invention have been described, the present invention is not limited thereto, and various design modifications are possible without departing from the scope thereof.

For example, in the above embodiment, the electric drive unit U of the present invention is used for driving the rear wheel of a motorcycle, but it may be used for driving the drive wheels of a vehicle other than a motorcycle. Alternatively, the electric drive unit U of the present invention may be used as an electric drive unit for various mechanical devices other than vehicles.

Although the output shaft So of the electric drive unit U in the above embodiment cantilevers the rear axle 17 (hence, the rear wheel WR), the swing arm A may be provided with a portion extending to the right side of the rear wheel WR, and the rear axle 17 (hence, the rear wheel WR) may be supported by both this portion and the electric drive unit U.

Furthermore, in contrast to the above embodiment in which the first intermediate gear 21 is separably coupled (e.g., spline-fitted) to the counter shaft Sc while the second intermediate gear 22 is formed integrally with the counter shaft Sc, the second intermediate gear 22 may be separably coupled (e.g., spline-fitted) to the counter shaft Sc while the first intermediate gear 21 is formed integrally with the counter shaft Sc. Alternatively, any of the first intermediate gear 21 and second intermediate gear 22 may be separably coupled (e.g., spline-fitted) to the counter shaft Sc.

Although the gear teeth of the input gear 20, the first intermediate gear 21 and second intermediate gear 22, and the output gear 23 in the above embodiment are formed as spur gear teeth, in the present invention, the gear teeth may be formed of helical gear teeth instead of spur gear teeth.

Although the rotor shaft 33 functioning as the output shaft of the electric motor M in the above embodiment is integrally formed on the same axis as the input shaft Si of the reduction gear R to simplify the connecting structures and reducing the diameters of both shafts 33 and Si, the rotor shaft 33 of the electric motor M may be coaxially coupled (e.g., spline-fitted) as a separate component from the input shaft Si of the reduction gear R, or the both shafts 33 and Si may be mutually interlocked and rotated Through an interlocking mechanism without being coaxially arranged.

Although the front end of the swing arm A in the above embodiment is supported by the vehicle body F via the pivot shaft 16 so as to be vertically swingable, but the front end of the swing arm A may be supported by the vehicle body F so as to be vertically swingable via a small link which is a part of the rear suspension.

The partition wall 50 shared by the reduction gear case Cr and the motor case Cm in the above embodiment is formed integrally with the main body part of the motor case Cm including the outer peripheral wall integrally, another embodiment is also possible in which the partition wall 50 is formed integrally with the main body part including the outer peripheral wall of the reduction gear case Cr. In this instance, by making the reduction gear case Cr as a case dividable structure in which the outer side wall facing the partition wall of the reduction gear case Cr is detachably connected to the main body part including the partition wall and the outer peripheral wall, the gear sets G1 to G3 can be incorporated into the reduction gear case Cr.

Further, although the overall reduction ratio of the plurality of gear sets G1 to G3 is made different by changing only the second reduction ratio in the above embodiment, the overall reduction ratios of the plurality of gear sets G1 to G3 may be made different by changing only the first reduction ratio or by changing both the first reduction ratio and the second reduction ratio.

## Claims

1. An electric drive unit (U) in which an electric motor (M) and a reduction gear (R) are integrated, wherein the reduction gear (R) comprises an input shaft (Si), a counter shaft (Sc), and an output shaft (So) which are parallel to one another, and wherein an input gear (20) fixed to the input shaft (Si) and rotationally driven by the electric motor (M), a first intermediate gear (21) supported by the counter shaft (Sc) and engaged with the input gear (20), a second intermediate gear (22) that rotates coaxially and integrally with the first intermediate gear (21), and an output gear (23) fixed to the output shaft (So) and engaged with the second intermediate gear (22) constitute a gear set (G1 to G3) for decelerating the rotation of the input shaft (Si) and transmitting the rotation to the output shaft (So),
the electric drive unit (U) further comprising: one gear set selected from a plurality of gear sets (G1 to G3) having different overall reduction ratios; and a case (Cr, C) capable of accommodating and incorporating any gear set of the plurality of gear sets (G1 to G3),
wherein each of the plurality of gear sets (G1 to G3) has the same inter-shaft distances (LI, L2) between the input shaft (Si), the counter shaft (Sc), and the output shaft (So), and at least one of the first intermediate gear (21) and second intermediate gear (22) has a gear diameter different from that of the other gear sets (G1 to G3).

2. The electric drive unit (U) according to claim 1,
wherein a second reduction ratio determined by the second intermediate gear (22) and the output gear (23) is set smaller than a first reduction ratio determined by the input gear (20) and the first intermediate gear (21), and
wherein each of the plurality of gear sets (G1 to G3) has an overall reduction ratio different from the other gear sets (G1 to G3) by making the second reduction ratio different.

3. The electric drive unit (U) according to claim 2, wherein the input gear (20) is formed integrally with the input shaft (Si).

4. The electric drive unit (U) according to any one of claims 1 to 3,
wherein each of the plurality of gear sets (G1 to G3) has an overall reduction ratio different from the other gear sets (G1 to G3) by making the gear diameter of the first intermediate gear (21) same as the other gear sets (G1 to G3) and the second reduction ratio determined by the second intermediate gear (22) and the output gear (23) different from the other gear sets (G1 to G3), and
wherein the lowest end positions of the output gear (23) and the first intermediate gear (21) have substantially the same height or the lowest end position of the output gear (23) is lower than the lowest end position of the first intermediate gear (21) when the gear set having the minimum overall reduction ratio of the plurality of gear sets (G1 to G3) is incorporated into the case (Cr, C).

5. The electric drive unit (U) according to any one of claims 2 to 4, wherein in each of the plurality of gear sets (G1 to G3), the first intermediate gear (21) and second intermediate gear (22) are configured as separate components and are supported by the counter shaft (Sc) in a relatively non-rotatable manner, and only the second intermediate gear (22) among the first intermediate gear (21) and second intermediate gear (22) has a gear diameter different from that of the other gear sets (G1 to G3).

6. The electric drive unit (U) according to any one of claims 1 to 5 that is used for rear wheel drive of a motorcycle (V),
wherein the case (Cr, C) is formed separately from a swing arm (A) pivotally supported by a vehicle body (F) of the motorcycle (V) and is connected to the swing arm (A) by retrofitting.

7. The electric drive unit (U) according to any one of claims 1 to 6,
wherein the case (C) comprises a reduction gear case (Cr) serving as a housing of the reduction gear (R),
wherein the reduction gear case (Cr) and a motor case (Cm) serving as a housing of the electric motor (M) are connected to each other so as to share a partition wall (50) partitioning the reduction gear (R) and the electric motor (M) in the axial direction of the input shaft (Si).

8. A manufacturing method of an electric drive unit (U) in which an electric motor (M) and a reduction gear (R) are integrated, wherein the reduction gear (R) comprises an input shaft (Si), a counter shaft (Sc), and an output shaft (So) which are parallel to one another, and wherein an input gear (20) fixed to the input shaft (Si) and rotationally driven by the electric motor (M), a first intermediate gear (21) supported by the counter shaft (Sc) and engaged with the input gear (20), a second intermediate gear (22) that rotates coaxially and integrally with the first intermediate gear (21), and an output gear (23) fixed to the output shaft (So) and engaged with the second intermediate gear (22) constitute a gear set (G1 to G3) for decelerating the rotation of the input shaft (Si) and transmitting the rotation to the output shaft (So), the method comprising:
a step of preparing a plurality of gear sets (G1 to G3) having different overall reduction ratios according to a plurality of required specifications related to the tire diameter or the maximum vehicle speed of the vehicle (V) on which the electric drive unit (U) is to be mounted;
a step of preparing a case (Cr, C) capable of accommodating and incorporating any gear set of the plurality of gear sets (G1 to G3); and
a step of selecting one gear set from the plurality of gear sets (G1 to G3) in accordance with the required specifications of the vehicle (V) on which the electric drive unit (U) is to be mounted and incorporating the gear set into the case (Cr, C).
